**Europäisches Patentamt**

**European Patent Office**

**Office européen des brevets**

(19)

(11) Veröffentlichungsnummer: **0 138 017**
**B1**

(12) # EUROPÄISCHE PATENTSCHRIFT

(45) Veröffentlichungstag der Patentschrift:
**01.06.88**

(21) Anmeldenummer: **84110467.2**

(22) Anmeldetag: **03.09.84**

(51) Int. Cl.⁴: **G 01 F 1/66**

(54) **Verfahren zur Ultraschall-Durchflussmessung nach dem Dopplerprinzip mit verbesserter Ortsauflösung.**

(30) Priorität: **15.09.83 DE 3333409**

(43) Veröffentlichungstag der Anmeldung:
**24.04.85 Patentblatt 85/17**

(45) Bekanntmachung des Hinweises auf die Patenterteilung:
**01.06.88 Patentblatt 88/22**

(84) Benannte Vertragsstaaten:
**CH DE FR GB IT LI NL SE**

(56) Entgegenhaltungen:
**DE - A - 3 020 282**
**US - A - 4 257 278**
**US - A - 4 295 378**

(73) Patentinhaber: **Siemens Aktiengesellschaft Berlin und München, Wittelsbacherplatz 2, D-8000 München 2 (DE)**

(72) Erfinder: **Mágori, Valentin, Dipl.-Phys.,
Limburgstrasse 17, D-8000 München 90 (DE)**

## Beschreibung

Die Erfindung bezieht sich auf ein Verfahren zur Ultraschall-Durchflussmessung, wie es im Oberbegriff des Anspruchs 1 angegeben ist und auf zur Durchführung des Verfahrens zu verwendende Vorrichtungen nach dem Oberbegriff der Ansprüche 5 bzw. 6.

Aus der US-A-4 295 378 ist ein Verfahren und eine Vorrichtung bekannt, mit der Flüssigkeitsströmung gemessen werden kann. Es sind dort zwei an verschiedenen Stellen am Rohr fest angebrachte Ultraschallwandler vorgesehen, deren konstruktiv bedingt unveränderbare Sende- bzw. Empfangsrichtungen sich in einem festgelegten Ort im Rohrinneren schneiden, womit ein Messvolumen für gemittelte Strömungsmessung definiert ist. Das Messprinzip beruht auf Auswertung der Dopplerfrequenzverschiebung, die auf der Flüssigkeitsströmung im Rohr beruht.

Es ist aus der DE-A-3 020 282 bekannt, mit Hilfe von Ultraschall, jedoch nicht unter Ausnutzung des Dopplerprinzips, Strömungsmessungen im Innern von Rohrleitungen vorzunehmen. Bei einem derartigen Verfahren der DE-A-3 020 282, Fig. 1, wird schräg zur Geschwindigkeit des im Innern der Rohrleitung strömenden Mediums Ultraschall von einem Sendewandler zu einem Emfpangswandler derart ausgesandt, dass die Ultraschall-Strahlung möglichst auch den Bereich der Achse der Rohrleitung (in schräger Richtung) durchquert. Der zugehörige Empfangswandler ist in entsprechender Lage in bzw. am Rohr so positioniert, dass er die im schrägen Winkel ausgesandte Ultraschall-Strahlung empfangen kann. Indem man den Empfangswandler in einer zweiten Betriebsphase als Sendewandler benutzt und den vorherigen Sendewandler dann als Empfangswandler verwendet, erfolgt eine Ultraschall-Messung entlang der Messstrecke sowohl in Hin-Richtung als auch in Her-Richtung. Mittels bekannter Differenzmessung wird dort wie bei anderen entsprechenden Strömungsmessern der Messwert ermittelt, der ein Mittelwert über die gesamte Messstrecke ist. Die Genauigkeit der Durchflussmessung nach diesem Verfahren ist relativ hoch. Allerdings ist auch der elektronische Aufwand hierzu beträchtlich.

Es ist eine Aufgabe der vorliegenden Erfindung, ein Verfahren anzugeben, mit dem eine insgesamt ebenfalls genaue Erfassung bzw. Messung der Durchflussmenge in einer Rohrleitung zu erzielen ist, jedoch mit geringerem elektronischem Aufwand.

Diese Aufgabe wird mit Hilfe des Verfahrens nach Patentanspruch 1 bzw. mit Vorrichtungen nach den Patentansprüchen 5 und 6 gelöst. Weitere Ausgestaltungen und Weiterbildungen der Erfindung gehen aus den abhängigen Ansprüchen hervor.

Der Erfindung liegt die Erkenntnis zugrunde, dass die innerhalb einer Rohrleitung auftretende Strömung bzw. das Strömungsprofil eines Querschnittes dieser Rohrleitung mit den bisher bekannten Methoden nur schwierig und ungenau und auch nicht ortsvariabel zu erfassen ist. Dies wäre aber notwendig für solche Strömungsmessungen, von deren Genauigkeit erhebliche wirtschaftliche Werte, z.B. Verbrauchsmessungen und deren Kostenberechnung, abhängen.

Dem erfindungsgemässen Lösungsprinzip liegt zugrunde, mindestens einen der beiden verwendeten Wandler (Sende- und/oder Empfangswandler) mit zeitlich veränderlicher Ultraschall-Richtung zu betreiben. Dazu gehört, dass Senderichtung und Empfangsrichtung der Ultraschall-Strahlung sich im Rohrinnern schneiden, anders als etwa bei dem Prinzip der DE-A-3 020 282, Fig. 1, wo Sende- und Empfangsrichtung 12 ineinanderfallen und kein Schnittpunkt zu definieren ist. Erfolgen aber Aussendung und Empfang in sich miteinander schneidenden Richtungen, ist mit dem Schnittpunkt ein Messpunkt bzw. entsprechend dem Querschnitt der Ultraschall-Strahlung und dem Querschnitt der Empfangs-Strahlungskeule der Ort eines differenziellen Strömungsvolumens bestimmt, für den allein im Augenblick die Strömungsmessung nach dem Dopplerprinzip erfolgt. Hier von Ultraschall-Sendestrahl des aussendenden Ultraschall-Wandlers zu sprechen ist begrifflich unproblematisch. Für den Empfang, für den die für die Sendefrequenz f massgebliche Empfangs- und Schallkeule des empfangenen Ultraschall-Wandlers zu berücksichtigen ist, soll der Begriff «virtueller Empfangsstrahl» im nachfolgenden verwendet werden.

Bei der vorliegenden Erfindung wird also mit zeitlich sich änderndem Winkel des Sendestrahls und sich änderndem Winkel des virtuellen Empfangsstrahls gearbeitet. Diese zeitliche Veränderung der Richtungen kann mechanisch bewirkt werden. Entscheidend vorteilhafter ist jedoch, dies mit elektrischen Mitteln zu bewirken, wozu nachfolgend die entsprechenden Ausführungsformen zur Erfindung beschrieben werden. Da mit der Erfindung einzelne Orte der Strömung im Rohrinnern erfasst werden können, ist durch entsprechende räumliche Abtastung – oftmals genügt aber bereits die Abtastung entlang einem Durchmesser des Rohrquerschnittes – das ganze Strömungsprofil im Rohrinneren zu ermitteln. Es kann eine Mitteilung der verschiedenen Messwerte des gesamten Strömungsprofils vorgenommen werden, womit eine erheblich genauere Aussage über das pro Zeiteinheit transportierte Strömungsvolumen erzielt wird. Es können aus dem mit der Erfindung nunmehr exakt ermittelbaren Strömungsprofil für einzelne Orte verschiedene Wichtungsfaktoren abgeleitet werden, die in die Mittelwertbildung eingeführt werden und die Genauigkeit des Mittelwertes erheblich steigern. Es besteht auch mit Hilfe der Erfindung die Möglichkeit, aus dem erfassten Strömungsprofil einen Messort zu ermitteln, der einen repräsentativen Wert ergibt, d.h. der quantitativ dem Mittelwert der Strömung gleich ist und dann anstelle dieses Mittelwertes später nur noch allein ermittelt wird.

Mit Hilfe der Erfindung lässt sich die jeweils tatsächliche Lage des Messortes im Rohrinnern rekonstruieren.

Für Messpunkte nahe der Rohrwand sind die Strömungsgeschwindigkeiten relativ klein. Mit Hilfe der Erfindung bzw. mit Hilfe der durch die Erfindung ermöglichten Mittelwertsbildung kann sogar die Messgenauigkeit des bekannten «clamp-on»-Verfahrens verbessert werden, bei dem lediglich auf einer einzigen im Rohrinnern festgelegten Messstrecke für Hin-Richtung und Her-Richtung gemessen wird, so wie z.B. bei Fig. 1 der DE-A-3 020 282. Das clamp-on-Verfahren hat seinen Namen davon, dass dabei die Wandler – eventuell auch nachträglich – von aussen an das Rohr angesetzt werden.

Eine ganz besonders wichtige Ausführungsform der vorliegenden Erfindung ist diejenige, bei der für die Durchführung des erfindungsgemässen Verfahrens Wandler nach der obengenannten DE-A-3 020 282 verwendet werden. Bezüglich des Aufbaues, der Arbeitsweise, der Wirkungsweise und weiterer Besonderheiten dieser Wandler der obengenannten DE-A sei hier auf den Inhalt der Beschreibung dieser Druckschrift hingewiesen.

In Fig. 1 der obengenannten DE-A und auch der vorliegenden Anmeldung ist mit 1 im Schnitt eine Rohrleitung bezeichnet, in der das hier nicht dargestellte, zu messende Medium strömt und durch dessen Innenraum hindurch Ultraschall – bei dieser bekannten Ausführungsform – mit dem festen Winkel von dem einen Wandler 2 zu dem anderen Wandler 3 und zur Differenzbildung vom Wandler 3 zum Wandler 2 ausgesendet wird. Der Wandler 2 mit einem plattenförmigen Körper K aus piezoelektrischer Keramik ist in die Wandung des Rohres 1 derart eingebaut, dass die Rohrinnenwandung möglichst keine oder nur geringfügige Diskontinuität ihrer Form hat. Insbesondere kann die Innenseite 4 des Körpers K des Wandlers 2 eine der Rohrinnenwandung entsprechende Krümmung haben oder es kann auch ein zusätzliches Aufsatzstück mit entsprechender Krümmung auf einem planen Körper K vorgesehen sein.

Die Wandler 2 und 3 haben vorzugsweise gleichen Aufbau. Z.B. ist auf der jeweiligen Innenseite 4 des Körpers K eine übliche ganzflächige Elektrodenbeschichtung angeordnet, die z.B. ausserdem noch mit einem Schutzüberzug versehen sein kann. Die Elektrodenbeschichtung 5 ist mit einer entsprechenden Anschlussleitung versehen.

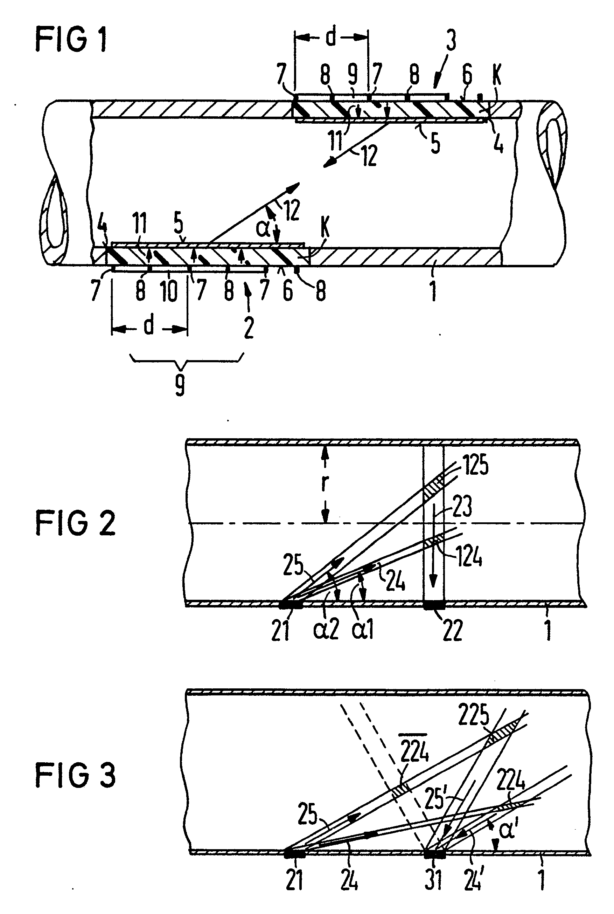

Auf der Aussenoberfläche 6 der Wandler 2, 3 ist die in der DE-A näher beschriebene Interdigitalstruktur angeordnet, die aus zwei mit ihren Elektrodenfingern ineinandergreifenden Kammstrukturen besteht, wobei die Finger einer jeden Kammstruktur mit je einer Sammelschiene verbunden sind. Die in der Fig. 1 geschnitten wiedergegebenen Finger 7 gehören zu der einen Kammstruktur 9 und die Finger 8 gehören zu der anderen, dazu interdigitalen Kammstruktur 10.

Mit den Pfeilen 11 ist die permanente Polarisation des piezoelektrischen Keramikmaterials der Wandler 2, 3 bezeichnet. Diese Polarisation kann auch den dargestellten Pfeilen 11 entgegengesetzt gerichtet sein. Es sei darauf hingewiesen, dass hier der Einfachheit halber gleichartig aufgebaute Wandler 2 und 3 vorgesehen sind; diese Wandler können aber auch unterschiedlichen Aufbau im Rahmen des Prinzip der DE-A (und der vorliegenden Erfindung) haben.

Der (augenblicklich) als Sender verwendete Wandler 2 oder 3 wird mit Wechselspannung einer Frequenz f gespeist. Zweckmässigerweise ist in bezug auf die vorteilhafterweise als Masse geschaltete Elektrode 5 vorgesehen, die beiden Kammstrukturen einer jeweiligen Interdigitalstruktur mit 180° phasenverschobenen Wechselspannungen $U_1$ und $U_2$ gleicher Frequenz f zu speisen. Von dem dann (augenblicklich) als Empfangswandler verwendeten Wandler 3 wird ein Ultraschall-Signal aufgenommen, das entsprechend der in die Strahlung 12 fallenden Geschwindigkeitskomponente der im Rohr vorliegenden Strömung eine Dopplerfrequenz-Verschiebung aufweist. Bei Vertauschen der Funktionen der Wandler 2 und 3 wird die entgegengesetzt gerichtete Laufzeit- oder Phasenverschiebung festgestellt und aus der Differenzbildung und dem Winkel α wird die – für eine solche Ausführungsform mittlere Strömungsgeschwindigkeit – für einen Durchmesser des Strömungsquerschnittes festgestellt.

Wie bereits in der obengenannten DE-A ausführlich beschrieben, ist der Vorzug eines derartigen Interdigitalwandlers derjenige, dass mit ihm in einem Winkel α schräg zur Wandleroberfläche Ultraschall-Strahlung abgestrahlt werden kann, so dass kein Strömungshindernis mit dem Einbau eines solchen Wandlers verbunden ist.

Es sei hier nochmals darauf hingewiesen, dass die Interdigitalstruktur eines solchen Wandlers der obengenannten DE-A sowohl durch entsprechende Fingerelektrodenstruktur 7, 8, durch alternierende Polarisation (Fig. 2 der DE-A-3 020 282) als auch durch Anwendung beider Prinzipien gemeinsam realisiert sein kann.

Aus der Bedingung d = λ/cosα ergibt sich

$$\alpha = \arccos \frac{c}{f \cdot d} \cdot$$

Es sind darin c die Schallgeschwindigkeit des Mediums, f die Frequenz der anregenden Spannung U, d die Periodizitätslänge der betreffenden Interdigitalstruktur und λ die Schallwellenlänge des Mediums, dessen Durchfluss zu messen ist.

Die Fig. 2 und 3 zeigen bevorzugte Ausführungsformen zur Erfindung, nämlich:

Fig. 2 ein Ausführungsbeispiel mit einem Wandler irgendeiner Ausführungsform nach der DE-A-3 020 282 und einem konventionellen zweiten Wandler,

Fig. 3 ein Ausführungsbeispiel mit zwei Wandlern der DE-A-3 020 282 und

Fig. 4 ein Schaltungsbeispiel der Elektronik.

Mit 21 ist ein Wandler nach Fig. 1 bzw. der DE-A-3 020 282 bezeichnet, der in die Rohrwandung 1 wie in Fig. 1 eingebaut ist. Mit 22 ist ein konventioneller Wandler bezeichnet, der z.B. eine mit auf beiden Seiten ganzflächigen Elektroden versehene Piezo-Keramikscheibe ist. Dieser Wandler 22 kann bei der Erfindung – wie in Fig. 2 dargestellt – in die Rohrwandung 1 in einer Ebene mit derselben eingebaut sein. Der Wandler 22 wird dauernd als Empfangswandler verwendet und für die Erfindung genügt es, wenn dieser Wandler 22 aufgrund seines Aufbaues und Einbaues eine lediglich in Durchmesser-Richtung 23 gerichtete (Empfangs-) Schallkeule hat.

Der Wandler 21 kann so betrieben werden, dass er seinen Ultraschall mit veränderbaren Winkeln $\alpha_n$ aussendet. Mit 24 und 25 sind zwei Beispiele mit den Winkeln $\alpha_1$, $\alpha_2$ bezeichnet. Wie dargestellt, führen diese unterschiedlichen Aussenderichtungen 24 und 25 zu zwei verschiedenen Messsorten 124 und 125, für die sich entsprechend den Schallkeulen die angedeuteten differentiellen Messvolumina 124, 125 ergeben. Sie liegen im Bereich der jeweiligen Schnittpunkte von Senderichtung 24, 25 und feststehender Empfangsrichtung 23. Die Ausstrahlungswinkel $\alpha_1$, $\alpha_2$ werden durch Betreiben des Wandlers 21 mit Wechselspannungen der Frequenzen $f_1$ und $f_2$ bewirkt. Durch entsprechende Wahl der Frequenz $f_n$ können bei entsprechender Positionierung der Wandler 21 und 22 zueinander alle Orte entlang eines Durchmessers des Innenraumes der Rohrwandung 1 (zumindest aber diejenigen des mit r angedeuteten Halbmessers) ermittelt werden, so dass ein zuverlässiges Bild über das gesamte Strömungsprofil zu ermitteln ist.

Der Zusammenhang zwischen (punktueller) Strömungsgeschwindigkeit v und Dopplerfrequenz f ist bei der Anordnung nach Fig. 2 der folgende:

$$v = \frac{\Delta f \cdot c}{f \cdot \cos\alpha} \qquad (1)$$

Durch Einsetzen der oben angegebenen Beziehung für cos erhält man

$$v = \frac{\Delta f \cdot c \cdot f \cdot d}{f \cdot c} = \Delta f \cdot d \qquad (2)$$

Dies bedeutet, dass die gemessene Doppelfrequenz $\Delta f$ nur noch von der Strömungsgeschwindigkeit v und der Periodizitätskonstanten d des Interdigitalwandlers abhängt. Beim erfindungsgemässen Verfahren ist es somit nicht erforderlich, die gemessene Dopplerfrequenz mit der Sendefrequenz in Beziehung zu setzen. Es entfällt sogar die Abhängigkeit von der Schallgeschwindigkeit c des strömenden Mediums, die bei herkömmlichen Ultraschall-Doppler-Strömungsmessern nachteiligerweise mit allen ihren Änderungen zu berücksichtigen ist.

Anstelle des Aufbaues nach Fig. 2 können vorteilhafterweise für die Erfindung auch zwei Wandler nach dem Prinzip der DE-A-3 020 282 verwendet werden, wie dies Fig. 3 zeigt. Aus Fig. 3 ist leicht ersichtlich, welche vielfältigen Möglichkeiten sich für die Erfassung des Innenraumes der Rohrwandung 1 damit ergeben. Mit 224 und 225 sind die differentiellen Messvolumina bezeichnet, die sich einmal für die Frequenz $f_1$ und für die Frequenz $f_2$ der Betriebswechselspannung des aussendenden Wandlers 21 (oder 31) ergeben. Es sei darauf hingewiesen, dass bei der Ausführungsform der Fig. 3 Sende- und Empfangsfunktion der Wandler 21 und 31 auch vertauscht werden können. Ein solcher Wandler 21, 31 hat die dargestellte frequenzabhängige Richtung, gleichermassen für das Senden und für den Empfang.

Wie aus der Darstellung der Fig. 3 mit Kenntnis der Erfindung zu erkennen ist, sind Massnahmen zu treffen, dass sich die (Sende- bzw. Empfangs-) Schallkeulen 24, 25 des Wandlers 21, nämlich für eine Frequenz $f_1$ und eine Frequenz $f_2$ mit der jeweiligen Schallkeule 24', 25' des zweiten Wandlers 31 für die jeweilige Frequenz auch tatsächlich miteinander schneiden. Eine Möglichkeit dies zu erreichen ist, wenigstens einen der Wandler 21, 31 etwas schräggerichtet in die Rohrinnenwandung 1 einzubauen. Dabei würde aber ein wesentlicher Vorteil der Wandler der DE-A-3 020 282 wenigstens zum Teil preisgegeben werden. Vorteilhaft ist es dagegen, die beiden Wandler 21 und 31 mit voneinander verschiedenen Periodizitätskonstanten $d_1$ und $d_2$ auszubilden, womit sich einerseits voneinander verschiedene Winkel $\alpha$ der Strahlen 24 und 25 bzw. 24' und 25' bei jeweils gleicher Frequenz f für Senden und Empfangen und damit zwangsläufig die dargestellten Schnittpunkte 224, 225 u.s.w. ergeben.

Analog der Gleichung (2) ist dann zu setzen:

$$v = \Delta f \, (d_1 + d_2) \qquad (3)$$

Da die schrägstrahlenden Interdigitalwandler der DE-A-3 020 282 wegen der üblicherweise nicht unidirektionalen Wirkung im allgemeinen zwei symmetrische Schallkeulen aufweisen, ergeben sich an sich für eine Frequenz f zwei Messpunkte, wie dies lediglich gestrichelt dargestellt und mit $\overline{224}$ bezeichnet ist. Wie dies in der genannten DE-A beschrieben ist, können die Wandler aber auch so ausgebildet werden, dass sie nur unidirektional strahlen bzw. empfangen. Eine solche Zweideutigkeit kann aber auch zur simultanen Messung in zwei Messvolumina genutzt werden. Bei geeignet gewählten Winkeln könnte die dabei resultierende Mittelung der Werte aus beiden Messvolumina 224 und $\overline{224}$ die Genauigkeit der Messung verbessern. Zur Gewinnung umfassenderer Informationen über das Strömungsprofil im Innern eines Rohres 1 und zur Steigerung der Redundanz können im Rahmen der vorliegenden Erfindung auch mehr als zwei Wandler 21, 22; 21, 31 kombiniert verwendet werden.

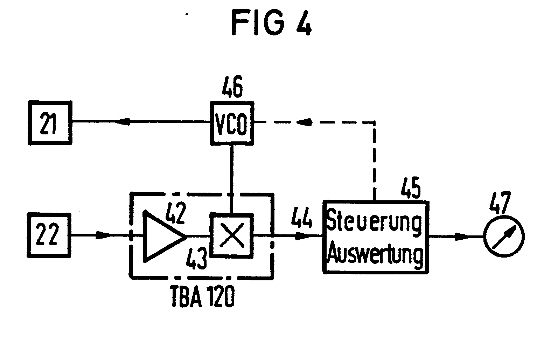

Fig. 4 zeigt ein Beispiel einer für die Erfindung zu verwendenden elektonischen Schaltung mit dem Sendewandler 21 und dem Empfangswandler 22. Der Sendewandler 21 wird von einem spannungsgesteuerten Oszillator (VCO) 46 mit einer Wechselspannung mit steuerbar veränderbarer Frequenz gespeist. Das Signal des Empfangswandlers 22 wird im Verstärker 42 verstärkt und dem Mischer 43 zugeführt. Der Mischer 43 erhält auch ein elektrisches Signal mit derjenigen Frequenz, mit der gerade der Sendewandler 21 gespeist wird. Vom Mischer 43 geht über die Leitung 44 das Dopplerfrequenz-Signal in die Schaltung 45, die sowohl die Steuerung für den Oszillator 46 als auch die Auswerteelektronik zur Umsetzung des Doppelfrequenz-Signals in einen Durchflussmengenwert enthält, der auf der Anzeige 47 ablesbar ist.

**Patentansprüche**

1. Verfahren zur Ultraschall-Durchflussmessung nach dem Doppler-Prinzip, bei dem zuvor ausgesandter Ultraschall (24, 25) mit einer der zu messenden Strömungsgeschwindigkeit entsprechenden Doppler-Frequenzverschiebung $\Delta f$ als reflektierter Ultraschall (23; 24'; 25') wieder empfangen wird, wobei die Strömung am Ort der Überschneidung (124, 125; 224, 225) der Sende-Schallkeule und der Empfangs-Schallkeule gemessen und aus dem Signal des Empfangswandlers (22, 31) bestimmt wird, gekennzeichnet dadurch, dass zur Erfassung und/oder Auswertung des vollständigen Strömungsprofils im Innern des Rohres (1) der Winkel $\alpha$ der Schallkeule (24, 25, 23; 24, 25, 24' 25') wenigstens eines der Sende- und Empfangswandler (21, 22; 21, 31) für jeweils einzelne Messungen in einem solchen Winkelbereich $\alpha_n$ verändert wird, dass ein repräsentativer Ausschnitt des Strömungsprofils des Querschnittes des Innern des Rohres (1) erfasst wird.

2. Verfahren nach Anspruch 1, gekennzeichnet dadurch, dass der Winkel $\alpha$ nur einer der beiden Schallkeulen (24, 25) des Sende- oder Empfangswandlers (21) verändert wird.

3. Verfahren nach einem der Ansprüche 1 oder 2, dadurch gekennzeichnet, dass der Winkel $\alpha$ in einem solchen Winkelbereich verändert wird, dass die Werte der Strömungsgeschwindigkeiten für einen Halbmesser (r) des Querschnittes des Innern des Rohres (1) gemessen werden.

4. Verfahren nach Anspruch 1, 2 oder 3, gekennzeichnet dadurch, dass die Veränderung des Winkels $\alpha$ durch Änderung der Frequenz der Anregungswechselspannung (U) für den Sendewandler (21), der Interdigitalstruktur (9, 10) besitzt, bewirkt wird.

5. Vorrichtung zur Durchführung des Verfahrens nach einem der Ansprüche 1 bis 4, mit einem Ultraschall-Sende- und Empfangswandler (21, 22), deren Sende- und Empfangskeule (24, 25; 23) sich am Ort, wo die Strömung im Inneren des Rohres (1) gemessen werden soll, überschneiden, und mit Mitteln (42 bis 47) zum Bestimmen der Doppler-Frequenzverschiebung $\Delta f$ aus dem Signal des Empfangswandlers (22), gekennzeichnet dadurch, dass der Sende- oder Empfangswandler (21) ein Ultraschall-Wandler ist, der Elektroden mit Interdigitalstruktur auf wenigstens einer der Flächen des jeweiligen Wandlerkörpers besitzt und/oder bei dem eine Polarisation erfolgt ist, die eine Interdigitalstruktur besitzt und die parallel zur Dicke des Wandlerkörpers und periodisch über die Länge des Wandlerkörpers alternierend gerichtet ist, dass Mittel zur Änderung der Frequenz der anregenden Wechselspannung und dadurch zu Änderungen der Winkel ($\alpha_1$, $\alpha_2$) der Schallkeule (24, 25) vorgesehen sind und dass der weitere zugehörige Empfangs- oder Sendewandler (22) ein Wandler mit richtungsmässig unveränderter Schallkeule (23) ist.

6. Vorrichtung zur Durchführung des Verfahrens nach einem der Ansprüche 1, 3 oder 4 mit einem Ultraschall-Sende- und Empfangswandler (21; 31), deren Sende- und Empfangskeulen (24, 25; 24', 25') sich am Ort, wo die Strömung im Inneren des Rohres (1) gemessen werden soll, überschneiden, und mit Mitteln (42 bis 47) zum Bestimmen der Doppler-Frequenzverschiebung $\Delta f$ aus dem Signal des Empfangswandlers (31), gekennzeichnet dadurch, dass sowohl der Sendewandler (21) als auch der Empfangswandler (31) Ultraschall-Wandler sind, die Elektroden mit Interdigitalstruktur auf wenigstens einer der Flächen des jeweiligen Wandlerkörpers besitzen und/oder bei denen eine Polarisation vorliegt, die eine Interdigitalstruktur besitzt und die parallel zur Dicke des Wandlerkörpers und periodisch über die Länge des Wandlerkörpers alternierend gerichtet ist, und dass Mittel zur Änderung der Frequenz der jeweils anregenden Wechselspannung des Sende-Wandlers (21, 31) und damit zur Änderung der Winkel ($\alpha'$) der Schallkeulen (24, 24', 25, 25') vorgesehen sind.

7. Vorrichtung nach Anspruch 6, gekennzeichnet dadurch, dass die an voneinander verschiedenen Orten in der Rohrwandung (1) angebrachten Wandler (21, 31) mit Interdigitalstruktur unterschiedlich grosse Periodizitätskonstanten haben.

**Claims**

1. A method of carrying out ultrasonic flow measurements in accordance with the Doppler principle, wherein previously transmitted ultrasound (24, 25) is received as reflected ultrasound (23; 24', 25'), with a Doppler frequency shift $\Delta f$ corresponding to the flow speed to be measured, where the flow is measured at the location of the intersection (124, 125; 224, 225) of the transmitting sound lobe and the receiving sound lobe and is determined from the signal of the receiving transducer (22, 31), characterised in that for the detection and/or analysis of the complete flow profiles inside the pipeline (1) the angle $\alpha$ of the sound lobe (24, 25, 23; 24, 25, 24', 25') of at least one of the transmitting and receiving transducers (21, 22; 21, 31) is changed for individual measurements within an angle range $\alpha_n$ such that a representative portion of the flow profile of the cross-section inside the pipeline (1) is detected.

2. A method as claimed in Claim 1, characterised in that the angle $\alpha$ of only one of the two sound lobes (24, 25) of the transmitting or receiving transducer (21) is changed.

3. A method as claimed in one of Claims 1 or 2, characterised in that the angle $\alpha$ is changed within a range such that the values of the flow speeds for a radius (r) of the cross-section of the interior of the pipeline (1) are measured.

4. A method as claimed in Claims 1, 2 or 3, characterised in that the change in the angle α is achieved by changing the frequency of the exciting a.c. voltage (U) for the transmitting transducrer (21), which has an interdigitated structure (9, 10).

5. A device for carrying out the method claimed in one of Claims 1 to 4, with an ultrasonic transmitting and receiving transducer (21, 22), whose transmitting and receiving lobes (24, 25; 23) intersect at the location at which the flow is to be measured inside the pipeline (1), and comprising means (42 to 47) for determining the Doppler frequency shift Δf from the signal of the receiving transducer (22), characterised in that the transmitting or receiving transducer (21) is an ultrasonic transducer which comprises electrodes with an interdigitated structure on at least one of the surfaces of the respective transducer bodies and/or wherein a polarisation has been effected to give an interdigitated structure and which is directed in parallel to the thickness of the transducer body and so as to alternate periodically along the length of the transducer body, that means are provided for changing the frequency of the exciting a.c. voltage and thus for changing the angles ($α_1$, $α_2$) of the sound lobe (24, 25), and that the other associated receiving or transmitting transducer (22) is a transducer with a sound lobe (23) which does not change in respect of direction.

6. A device for carrying out the method claimed in one of Claims 1, 3 or 4 comprising an ultrasonic transmitting and receiving transducer (21; 31) whose transmitting and receiving lobes (24, 25; 24', 25') intersect at the location at which the flow inside the pipeline (1) is to be measured, and comprising means (42 to 47) for determining the Doppler frequency shift Δf from the signal of the receiving transducer (31), characterised in that both the transmitting transducer (21) and the receiving transducer (31) are ultrasonic transducers which comprise electrodes with an interdigitated structure on at least one of the surfaces of the respective transducer body and/or wherein a polarisation is provided which has interdigitated structure and which is directed in parallel to the thickness of the transducer body and so as to alternate periodically along the length of the transducer body, and that means are provided for changing the frequency of the respective exciting a.c. voltage of the transmitting transducer (21, 31) and thus for changing the angle (α') of the sound lobes (24, 24', 25, 25').

7. A device as claimed in CLaim 6, characterised in that the transducers (21, 31) have interdigitated structures, which possess periodic constants, which differ in magnitude arranged at different locations in the pipeline wall (1).

## Revendications

1, Procédé de mesure de débits par ultrasons selon le principe Doppler, selon lequel des ultrasons (24, 25) émis préalablement sont à nouveau reçus avec un décalage de fréquence Doppler Δf, qui correspond à la vitesse d'écoulement à mesurer, sous la forme d'ultrasons réfléchis (23; 24'; 25'), l'écoulement à l'emplacement de l'intersection (124, 125; 224, 225) du lobe d'émission ultrasonore et du lobe de réception ultrasonore étant mesuré et étant déterminé à partir du signal du transducteur de réception (22, 31), caractérisé par le fait que pour la saisie et/ou l'évaluation du profil complet d'écoulement à l'intérieur du tube (1), on modifie l'angle α des lobes ultrasonores (24, 25, 23; 24, 25, 24', 25') d'au moins l'un des transducteurs d'émission et de réception (21, 22; 21 31) pour des mesures individuelles respectives dans une plage angulaire $α_n$ telle que l'on enregistre une section représentative du profil d'écoulement de la section transversale de l'intérieur du tube (1).

2. Procédé suivant la revendication 1, caractérisé par le fait qu'on modifie l'angle α uniquement de l'un des deux lobes ultrasonores (24, 25) du transducteur d'émission ou de réception (21).

3. Procédé suivant l'une des revendications 1 ou 2, caractérisé par le fait qu'on modifie l'angle α dans une plage angulaire telle qu'on mesure les valeurs des vitesses d'écoulement pour un rayon (r) de la section transversale de l'intérieur du tube (1).

4. Procédé suivant la revendication 1, 2 ou 3, caractérisé par le fait qu'on réalise la modification de l'angle α au moyen d'une modification de la fréquence de la tension alternative d'excitation (U) pour le transducteur d'émission (21), qui possède une structure interdigitée (9, 10).

5. Dispositif pour la mise en œuvre du procédé suivant l'une des revendications 1 à 4, comportant un transducteur d'émission ultrasonore et un transducteur de réception ultrasonore (21, 22), dont les lobes d'émission et de réception (24, 25; 23) se recoupent à l'emplacement où l'on doit mesurer l'écoulement à l'intérieur du tube (1), et comportant des moyens (42 à 47) pour déterminer le décalage de fréquence Doppler Δf à partir du signal du transducteur de réception (21), caractérisé par le fait que le transducteur d'émission ou de réception (21) est un transducteur ultrasonore, qui possède des électrodes comportant une structure interdigitée et disposées sur au moins l'une des surfaces du corps respectif du transducteur et/ou dans lequel il se produit une polarisation qui possède une configuration interdigitée et est dirigée en alternance parallèlement à l'épaisseur du corps de transducteur et périodiquement sur la longueur du corps du transducteur, qu'il est prévu des moyens pour modifier la fréquence de la tension alternative d'excitation et pour modifier de ce fait l'angle ($α_1$, $α_2$) des lobes ultrasonores (24, 25) et que l'autre transducteur associé de réception ou d'émission (22) est un transducteur présentant un lobe ultrasonore (23) dont la direction est inchangée.

6. Dispositif pour la mise en œuvre du procédé suivant l'une des revendications 1, 3 ou 4, comportant un transducteur d'émission ultrasonore et un transducteur de réception ultrasonore (21; 31), dont les lobes d'émission et de réception (24, 25; 24', 25') se recoupent à l'emplacement où l'on doit mesurer l'écoulement à l'intérieur du tube (1), et comportant des moyens (42 à 47) pour déterminer le décalage de fréquence Doppler Δf à partir du signal du transducteur de réception (31), caractérisé par le fait qu'aussi bien le transducteur d'émission (21) que le transducteur de réception (31) sont des transducteurs ultrasonores, qui possèdent des électrodes munies d'une structure interdigitée et situées sur au moins l'une des surfaces du corps respectif du transducteur et/ou dans lesquels il se produit une polarisation qui possède une configuration interdigitée et est dirigée en alternance parallèlement à l'épaisseur du corps du transducteur et périodiquement sur la longueur du corps du transducteur, et qu'il est prévu des moyens pour modifier la fréquence de la tension alternative respective d'excitation du transducteur d'émission (21, 31) et par conséquent pour modifier l'angle (α') des lobes ultrasonores (24, 24', 25, 24').

7. Dispositif suivant la revendication 6, caractérisé par le fait que les transducteurs (21, 31), qui sont disposés en des emplacements différents les uns des autres à l'intérieur de la paroi (1) du tube et comportent une structure interdigitée, possèdent des constantes de périodicité différentes.

FIG 1

FIG 2

FIG 3

# FIG 4